# EUROPÄISCHE PATENTSCHRIFT

(11) **EP 0 591 888 B1**
(45) Veröffentlichungstag und Bekanntmachung des Hinweises auf die Patenterteilung: **03.01.1996**
(21) Anmeldenummer: 93115980.0
(22) Anmeldetag: 04.10.1993
(51) Int. Cl.: C08F 6/24, C08F 6/02, C08J 3/16

(54) **Verfahren zur Aufarbeitung wässriger Dispersionen von Fluorthermoplasten**
Process for the treatment of fluorinated thermoplastic aqueous dispersions
Procédé de traitement de dispersions aqueuses de thermoplastiques fluorés

(30) Priorität: 08.10.1992 DE 4233824
(43) Veröffentlichungstag der Anmeldung: 13.04.1994
(73) Patentinhaber: HOECHST AKTIENGESELLSCHAFT, D-65926 Frankfurt am Main (DE)
(72) Erfinder: Beyer, Gerhard, Dr., D-84508 Burgkirchen (DE); Sulzbach, Reinhard, Dr., D-84489 Burghausen (DE); Weiss, Eduard, Dipl.-Ing., D-84489 Burghausen (DE); Hengel, Rolf, Dr., D-84508 Burgkirchen (DE)

(56) Entgegenhaltungen:
- DE-A- 3 439 334
- US-A- 2 593 583
- US-A- 3 046 263

## Beschreibung

Die Erfindung betrifft ein Verfahren zur Aufarbeitung wäßriger Dispersionen von Fluorthermoplasten, das kontinuierlich betrieben werden kann und in hohen Durchsätzen ein hochwertiges Produkt liefert.

Bekannte Verfahren zur Verarbeitung von Polytetrafluorethylen-Dispersionen sind in US-A-2 593 583 und US-A-3 046 263 beschrieben.

Das erfindungsgemäße Verfahren ist dadurch gekennzeichnet, daß man
- in der aus der Polymerisation resultierenden wäßrigen Dispersion die Kationen im wesentlichen durch Wasserstoffionen ersetzt,
- die Dispersion komprimiert, nötigenfalls nach Verdünnen mit Wasser,
- die komprimierte Dispersion durch eine oder mehrere kleine Öffnung(en) entspannt und dadurch koaguliert,
- die koagulierte Phase, nötigenfalls nach Verdünnen mit Wasser und/oder Erwärmen, auf ein Filter bringt,
- dort wäscht,
- mechanisch vorentwässert,
- zu einem rieselfähigen Produkt zerkleinert und
- nötigenfalls auf die gewünschte Restfeuchte trocknet.

Im folgenden werden bevorzugte Ausgestaltungen der Erfindung näher erläutert.

Das Verfahren ist so ausgelegt, daß es in allen Teilen kontinuierlich durchgeführt werden kann. Es ist natürlich auch möglich, nur einzelne der genannten Schritte kontinuierlich und die übrigen absatzweise durchzuführen. Die kontinuierliche Durchführung ist bevorzugt, da sie nicht nur ökonomisch ist, sondern auch eine gleichmäßige hohe Produktqualität gewährleistet.

Das erfindungsgemäße Verfahren kann mit allen üblichen Fluorthermoplasten durchgeführt werden, beispielsweise mit Copolymeren des Tetrafluorethylens mit mindestens einem Comonomer, ausgewählt aus der Gruppe Vinylidenfluorid, Hexafluorpropen, Chlortrifluorethylen, einem niederen Perfluor(alkylvinyl)ether wie beispielsweise Perfluor(propyl-vinyl)ether und Ethylen.

Die wäßrige Dispersion des Fluorthermoplasten kann in an sich bekannter Weise hergestellt werden. Die Polymerisation kann beispielsweise auch mit dem Permanganat-System gestartet werden, da die resultierenden Kationen ohnehin aus dem System entfernt werden.

Der Ersatz der Kationen durch Wasserstoffionen erfolgt bevorzugt mit einem stark sauren Ionenaustauscher, der nötigenfalls anhand einfacher Vorversuche aus den vielen handelsüblichen Typen ausgewählt wird. Die Auswahl richtet sich hierbei danach, daß im wesentlichen alle Kationen aus der Polymerdispersion entfernt werden, da deren Verbleib die Produktqualität beeinträchtigen kann.

Die so erhaltene Dispersion wird nun - nötigenfalls nach Verdünnen mit Wasser - zunächst komprimiert, dann durch Düsen oder Spaltöffnungen entspannt und so koaguliert. Dieser Vorgang kann in handelsüblichen Hochdruck-Homogenisatoren erfolgen. Der Kompressionsdruck richtet sich nach dem verfügbaren Apparat, üblich sind Drücke von 200 bis 400 bar, zweckmäßig etwa 300 bar.

Die koagulierte Phase bildet einen mehr oder weniger steifen Brei oder Schaum. Dieser wird nötigenfalls mit Wasser verdünnt, wobei diese Verdünnung in einem Mischgefäß erfolgen kann. Falls erforderlich, kann hierbei auch eine Erwärmung auf Temperaturen bis etwa 50 °C erfolgen, um das Fördern und die weitere Verarbeitung zu erleichtern.

Die so erhaltene, gut förderfähige koagulierte Phase wird dann auf die Filterapparatur gefördert. Zweckmäßig ist eine Filterbandpresse, auf deren Filterband das Koagulat in dünner Schicht aufgebracht wird. Die Dicke dieser Schicht wird so dimensioniert, daß die Hilfschemikalien aus der Polymerisation leicht ausgewaschen werden können.

Da das Verfahren ohne Hilfschemikalien wie starke Säuren zur Koagulation auskommt, liegen die Polymerisationshilfsmittel wie beispielsweise die Perfluoroctansäure, deren Salz als Emulgator eingesetzt wurde, in relativ leicht löslicher Form vor. Hierdurch wird nicht nur das erfindungsgemäße Verfahren erleichtert, sondern auch Waschflüssigkeit eingespart. Hierdurch wird wiederum die Rückgewinnung der Polymerisationshilfsmittel erleichtert und die Abwasserbelastung reduziert. Die bevorzugte Waschflüssigkeit ist Wasser einer Temperatur von vorzugsweise mindestens 60 °C, zweckmäßig 80 bis 90 °C.

Das gewaschene Koagulat wird in die Preßzone der Filterbandpresse gefördert und dort mechanisch teilentwässert. Hierdurch wird der Energieaufwand bei einer Endtrocknung erheblich reduziert.

Der aus dieser mechanischen Vortrocknung resultierende Preßkuchen wird dann in an sich bekannter Weise zu einem rieselfähigen Produkt zerkleinert, zweckmäßig in einer Mühle und anschließend in einem sogenannten Kompaktor, bestehend aus einem Kollergang mit Matrize (Grundplatte mit Löchern).

Man erhält so gut rieselfähige Pellets, die kein Wasser mehr aufnehmen. Diese Pellets weisen je nach Polymer etwa 2 bis 12 Gew.-% Restfeuchte auf.

Dieses rieselfähige Produkt läßt sich - sofern erforderlich - gut kontinuierlich trocknen, beispielsweise in einem Fließbett oder in einem Schachttrockner. Die Trocknungsbedingungen werden in an sich bekannter Weise auf die Materialeigenschaften, insbesondere auf die thermische Empfindlichkeit des Polymers, abgestimmt.

Es ist selbstverständlich auch möglich, den Trocknungsprozeß so zu führen, daß eventuell noch anhaftende flüchtige Verunreinigungen, beispielsweise restliche Perfluoroctansäure, entfernt und aus der Abluft wiedergewonnen werden, vor allem dann, wenn diese Wiedergewinnung aus der Abluft günstiger als aus dem Abwasser ist.

Die auf die gewünschte Restfeuchte getrockneten Produkte lassen sich sehr gut verarbeiten, so daß beispielsweise der Trockner unmittelbar mit einem Schmelzextruder kombiniert werden kann. Hierdurch wird eine Schmelzextrusion mit hoher Effizienz ermöglicht.

Das getrocknete Produkt läßt sich auch sehr leicht mahlen und kann unmittelbar kontinuierlich einer Mühle zugeführt werden.

Bei geringen Restfeuchten kann eine Schmelzextrusion in einem Zweischneckenextruder mit Entgasung ohne vorherige Trocknung angeschlossen werden.

Die Erfindung wird in den folgenden Beispielen näher erläutert. Prozentangaben beziehen sich auf das Gewicht.

### Beispiel 1

Eine 33%ige wäßrige Dispersion eines Terpolymers aus 60 % Tetrafluorethylen, 25 % Vinylidenfluorid und 15 % Hexafluorpropen, die das Ammoniumsalz der Perfluoroctansäure als Emulgator und Mangan(II)-Ionen aus dem Startersystem enthält, wird durch eine Säule mit einem handelsüblichen, stark sauren Ionenaustauscher (®LEWATIT SP 112, Bayer AG, Leverkusen) gepumpt. Die Säulenpackung ist so dimensioniert, daß der Restgehalt je Kationenart unter 0,2 ppm ist.

Das entsalzte Eluat wird mit vollentsalztem Wasser auf eine Konzentration von 18 % Polymer verdünnt und in einen Hochdruck-Homogenisator (Hersteller: APV Gaulin GmbH, Lübeck) gepumpt. Im Homogenisator wird die Dispersion auf 300 bar komprimiert und über einen schmalen Ringspalt entspannt. Hierbei koaguliert die Dispersion quantitativ, wobei ein steifer Brei entsteht. Dieser Brei wird in ein Mischgefäß gefördert und dort mit vollentsalztem Wasser auf 10 % Feststoffgehalt verdünnt und auf 40 °C erwärmt. Der so erhaltene, gut fließfähige Brei wird auf das Filterband einer Filterbandpresse gepumpt, zu einer dünnen Schicht ausgebreitet und mit Wasser von 80 bis 90 °C gewaschen. Hierbei werden die Hilfschemikalien aus der Polymerisation (Emulgator, Regler und dergleichen) weitgehend entfernt. Der gewaschene Brei wird in der Preßzone der Filterbandpresse auf 17 % Restwassergehalt entwässert. Der gebildete Preßkuchen fällt von der Filterbandpresse in eine Mühle, in der er zerschlagen wird. Die Preßkuchenstücke aus der Mühle fallen in einen Kompaktor (Kollergang mit Matrize, Hersteller: Firma Kahl, Hamburg) und werden dort zu Pellets von 3 mm Länge und einem Durchmesser von 2 mm verpreßt. Hierbei wird weiteres Wasser mechanisch abgequetscht, so daß die Pellets eine Restfeuchte von 12 % aufweisen. Diese Pellets sind mit Wasser nicht mehr benetzbar. Die Pellets werden in einen Schachttrockner eingespeist und dort im Gegenstrom mit Luft von 120 °C getrocknet.

Die getrockneten Pellets können unmittelbar über eine Austragsschnecke einem Schmelzextruder zugeführt und zu Schmelzgranulat umgeformt werden.

In einer weiteren Ausgestaltung der Erfindung werden die getrockneten Pellets kontinuierlich einer Mühle zugeführt und zu einem feinen Pulver gemahlen.

### Beispiel 2

Eine 25%ige wäßrige Dispersion eines Terpolymers aus 95 % Tetrafluorethylen, 3,5 % Perfluor(propyl-vinyl)ether und 1,5 % Hexafluorpropen, die das Ammoniumsalz der Perfluoroctansäure als Emulgator und Mangan(II)-Ionen aus dem Startersystem enthält, wird durch eine Säule mit einem handelsüblichen, stark sauren Ionenaustauscher (®LEWATIT SP 112, Bayer AG, Leverkusen) gepumpt. Die Säulenpackung ist so dimensioniert, daß der Restgehalt je Kationenart unter 0,2 ppm ist.

Das entsalzte Eluat wird mit vollentsalztem Wasser auf eine Konzentration von 16 % Polymer verdünnt und in einen Hochdruck-Homogenisator (Hersteller: APV Gaulin GmbH, Lübeck) gepumpt. Im Homogenisator wird die Dispersion auf 300 bar komprimiert und über einen schmalen Ringspalt entspannt. Hierbei koaguliert die Dispersion quantitativ, wobei ein steifer Brei entsteht. Dieser Brei wird in ein Mischgefäß gefördert und dort mit vollentsalztem Wasser auf 8 % Feststoffgehalt verdünnt und auf 40 °C erwärmt. Der so erhaltene, gut fließfähige Brei wird auf das Filterband einer Filterbandpresse gepumpt, zu einer dünnen Schicht ausgebreitet und mit Wasser von 80 bis 90 °C gewaschen. Hierbei werden die Hilfschemikalien aus der Polymerisation (Emulgator, Regler und dergleichen) weitgehend entfernt. Der gewaschene Brei wird in der Preßzone der Filterbandpresse auf < 12 % Restwassergehalt entwässert. Der gebildete Preßkuchen fällt von der Filterbandpresse in eine Mühle, in der er zerschlagen wird. Die Preßkuchenstücke aus der Mühle fallen in einen Kompaktor (Kollergang mit Matrize, Hersteller: Firma Kahl, Hamburg) und werden dort zu Pellets von 3 mm Länge und einem Durchmesser von 2 mm verpreßt. Hierbei wird weiteres Wasser mechanisch abgequetscht, so daß die Pellets eine Restfeuchte von < 4 % aufweisen. Diese Pellets sind mit Wasser nicht mehr benetzbar. Die Pellets werden in einen Schachttrockner eingespeist und dort im Gegenstrom mit Luft von 290 °C getrocknet.

Die getrockneten Pellets können unmittelbar über eine Austragsschnecke einem Schmelzextruder zugeführt und zu Schmelzgranulat umgeformt werden.

### Beispiel 3

Eine 20%ige wäßrige Dispersion eines Terpolymers aus 68 % Tetrafluorethylen, 24 % Ethylen und 8 % Perfluor(propyl-vinyl)ether, die das Ammoniumsalz der Perfluoroctansäure als Emulgator und Mangan(II)-Ionen aus dem Startersystem enthält, wird durch eine Säule mit einem handelsüblichen, stark sauren Ionenaustauscher (®LEWATIT SP 112, Bayer AG, Leverkusen) gepumpt. Die Säulenpackung ist so dimensioniert, daß der Restgehalt je Kationenart unter 0,2 ppm ist.

Das entsalzte Eluat wird mit vollentsalztem Wasser auf eine Konzentration von 17 % Polymer verdünnt und in einen Hochdruck-Homogenisator (Hersteller: APV Gaulin GmbH, Lübeck) gepumpt. Im Homogenisator wird die Dispersion auf 300 bar komprimiert und über einen schmalen Ringspalt entspannt. Hierbei koaguliert die Dispersion quantitativ, wobei ein steifer Brei entsteht. Dieser Brei wird in ein Mischgefäß gefördert und dort mit vollentsalztem Wasser auf 8 % Feststoffgehalt verdünnt und auf 40 °C erwärmt. Der so erhaltene, gut fließfähige Brei wird auf das Filterband einer Filterbandpresse gepumpt, zu einer dünnen Schicht ausgebreitet und mit Wasser von 80 bis 90 °C gewaschen. Hierbei werden die Hilfschemikalien aus der Polymerisation (Emulgator, Regler und dergleichen) weitgehend entfernt. Der gewaschene Brei wird in der Preßzone der Filterbandpresse auf < 12 % Restwassergehalt entwässert. Der gebildete Preßkuchen fällt von der Filterbandpresse in eine Mühle, in der er zerschlagen wird. Die Preßkuchenstücke aus der Mühle fallen in einen Kompaktor (Kollergang mit Matrize, Hersteller: Firma Kahl, Hamburg) und werden dort zu Pellets von 3 mm Länge und einem Durchmesser von 2 mm verpreßt. Hierbei wird weiteres Wasser mechanisch abgequetscht, so daß die Pellets eine Restfeuchte von unter 6 % aufweisen. Diese Pellets sind mit Wasser nicht mehr benetzbar. Die Pellets werden in einen Schachttrockner eingespeist und dort im Gegenstrom mit Stickstoff von 200 °C getrocknet.

Die getrockneten Pellets können unmittelbar über eine Austragsschnecke einem Schmelzextruder zugeführt und zu Schmelzgranulat umgeformt werden.

## Patentansprüche

1. Verfahren zur Aufarbeitung wäßriger Dispersionen von Fluorthermoplasten, dadurch gekennzeichnet, daß man
- in der aus der Polymerisation resultierenden wäßrigen Dispersion die Kationen im wesentlichen durch Wasserstoffionen ersetzt,
- die Dispersion komprimiert, nötigenfalls nach Verdünnen mit Wasser,
- die komprimierte Dispersion durch eine oder mehrere kleine Öffnung(en) entspannt und dadurch koaguliert,
- die koagulierte Phase, nötigenfalls nach Verdünnen mit Wasser und/oder Erwärmen, auf ein Filter bringt,
- dort wäscht,
- mechanisch vorentwässert,
- zu einem rieselfähigen Produkt zerkleinert und
- nötigenfalls auf die gewünschte Restfeuchte trocknet.

2. Verfahren nach Anspruch 1, dadurch gekennzeichnet, daß die Aufarbeitung kontinuierlich erfolgt.

3. Verfahren nach Anspruch 1 oder 2, dadurch gekennzeichnet, daß der Fluorthermoplast ein Copolymer des Tetrafluorethylens mit mindestens einem Comonomer, ausgewählt aus der Gruppe Vinylidenfluorid, Hexafluorpropen, Chlortrifluorethylen, einem niederen Perfluor(alkylvinyl)ether und Ethylen ist.

4. Verfahren nach einem oder mehreren der vorhergehenden Ansprüche, dadurch gekennzeichnet, daß die Entfernung der Kationen mit einem stark sauren Ionenaustauscher erfolgt.

5. Verfahren nach einem oder mehreren der vorhergehenden Ansprüche, dadurch gekennzeichnet, daß die Komprimierung und Entspannung der Dispersion in einem Hochdruck-Homogenisator erfolgt.

6. Verfahren nach einem oder mehreren der vorhergehenden Ansprüche, dadurch gekennzeichnet, daß das Filter eine Filterbandpresse ist.

7. Verfahren nach einem oder mehreren der vorhergehenden Ansprüche, dadurch gekennzeichnet, daß das Waschen mit Wasser von mindestens 60 °C erfolgt.

8. Verfahren nach einem oder mehreren der vorhergehenden Ansprüche, dadurch gekennzeichnet, daß die Zerkleinerung in einer Mühle mit angeschlossenem Kompaktor erfolgt.

9. Verfahren nach einem oder mehreren der vorhergehenden Ansprüche, dadurch gekennzeichnet, daß die Trocknung auf die gewünschte Restfeuchte in einem Schachttrockner erfolgt.

10. Verfahren nach Anspruch 9, dadurch gekennzeichnet, daß das Produkt aus dem Schachttrockner unmittelbar einer Mühle oder einem Schmelzextruder zugeführt wird.

## Claims

1. A process for working up aqueous dispersions of fluorinated thermoplastics which comprises
- substantially replacing the cations in the aqueous dispersion resulting from the polymerization by hydrogen ions,
- compressing the dispersion, if necessary after dilution with water,
- decompressing the compressed dispersion through one or more small opening(s), thereby coagulating it,
- transferring the coagulated phase, if necessary after dilution with water and/or heating, onto a filter,
- washing the product there,
- preliminary dewatering the product mechanically,
- breaking it up to give a free-flowing product and
- if necesary drying it to the desired residual moisture content.

2. The process as claimed in claim 1, wherein the working up is carried out continuously.

3. The process as claimed in claim 1 or 2, wherein the fluorinated thermoplastic is a copolymer of tetrafluoroethylene with at least one comonomer selected from the group consisting of vinylidene fluoride, hexafluoropropene, chlorotrifluoroethylene, a lower perfluoro(alkyl vinyl) ether and ethylene.

4. The process as claimed in one or more of the preceding claims, wherein the removal of the cations is carried out with a strongly acidic ion exchanger.

5. The process as claimed in one or more of the preceding claims, wherein the compression and decompression of the dispersion are carried out in a high pressure homogenizer.

6. The process as claimed in one or more of the preceding claims, wherein the filter is a filter belt press.

7. The process as claimed in one or more of the preceding claims, wherein washing is carried out with water of at least 60°C.

8. The process as claimed in one or more of the preceding claims, wherein the breaking up is carried out in a mill with attached compactor.

9. The process as claimed in one or more of the preceding claims, wherein drying to the desired residual moisture content is carried out in a tower dryer.

10. The process as claimed in claim 9, wherein the product from the tower dryer is fed directly to a mill or to a melt extruder.

## Revendications

1. Procédé pour le traitement complémentaire de dispersions aqueuses de thermoplastiques fluorés caractérisé en ce que :
- on remplace les cations dans la dispersion aqueuse obtenue de la polymérisation essentiellement par des ions hydrogène,
- on comprime la dispersion, si nécessaire après dilution avec de l'eau,
- on détend la dispersion comprimée au moyen d'un ou plusieurs petits orifices et on la coagule par ce moyen,
- on dépose la phase coagulée, si nécessaire après dilution avec de l'eau et/ou chauffage, sur un filtre,
- on la lave sur ce filtre,
- on la déshydrate préalablement par voie mécanique,
- on la fragmente en un produit apte à l'écoulement, et
- si nécessaire, on sèche jusqu'à ce que l'on obtienne l'humidité résiduelle désirée.

2. Procédé selon la revendication 1, caractérisé en ce que l'on effectue le traitement complémentaire en continu.

3. Procédé selon la revendication 1 ou 2, caractérisé en ce que le thermoplastique fluoré est un copolymère du tétrafluoroéthylène avec au moins un comonomère pris dans le groupe comportant le fluorure de vinylidène, l'hexafluoropropène, le chlorotrifluoroéthylène, un éther perfluoro(alkylvinylique) inférieur et l'étylène.

4. Procédé selon une ou plusieurs des revendications précédentes, caractérisé en ce que l'on effectue l'élimination des cations à l'aide d'un échangeur d'ions fortement acide.

5. Procédé selon une ou plusieurs des revendications précédentes, caractérisé en ce que l'on effectue la compression et la détente de la dispersion dans un homogénéiseur à haute pression.

6. Procédé selon une ou plusieurs des revendications précédentes, caractérisée en ce que le filtre est un filtre-presse à bande.

7. Procédé selon une ou plusieurs des revendications précédentes, caractérisé en ce que l'on effectue le lavage à l'eau à une température d'au moins 60°C.

8. Procéde selon une ou plusieurs des revendications précédentes, caractérisé en ce que l'on effectue la fragmentation dans un broyeur relié à un compacteur.

9. Procédé selon une ou plusieurs des revendications précédentes, caractérisé en ce que l'on effectue le séchage à la teneur résiduelle en humidité désirée dans un sécheur tunnel.

10. Procédé selon la revendication 9, caractérisé en ce que l'on dirige le produit du sécheur tunnel directement dans un broyeur ou dans une extrudeuse à l'état fondu.
